# EUROPÄISCHE PATENTSCHRIFT

(11) **EP 3 424 762 B1**
(45) Veröffentlichungstag und Bekanntmachung des Hinweises auf die Patenterteilung: **23.02.2022**
(21) Anmeldenummer: 18176950.6
(22) Anmeldetag: 11.06.2018
(51) Int. Cl.: B60J 5/04, B60R 5/00, B62D 31/02

(54) **OMNIBUS MIT EINEM GEPÄCKRAUM**
OMNIBUS WITH A LUGGAGE COMPARTMENT
OMNIBUS DOTÉ D'UN ESPACE À BAGAGES

(30) Priorität: 05.07.2017 DE 102017115045
(43) Veröffentlichungstag der Anmeldung: 09.01.2019
(73) Patentinhaber: MAN Truck & Bus SE, 80995 München (DE)
(72) Erfinder: Brunsteiner, Daniel, 80796 München (DE); Wawer, Ivo, 53604 Bad Honnef (DE); Lang, Laura, 85098 Großmehring (DE); Gaedtke, Sven, 85221 Dachau (DE); Landsherr, Thomas, 80995 München (DE); Elbs, Norbert, verstorben (DE); Schönherr, Stephan, 86153 Augsburg (DE)
(74) Vertreter: v. Bezold & Partner Patentanwälte - PartG mbB

(56) Entgegenhaltungen:
- BR-A2-102013 033 681
- CN-U- 204 895 312
- DE-A1- 4 236 422
- FR-A1- 2 895 340
- US-A1- 2009 218 839

## Beschreibung

Die Erfindung betrifft einen Omnibus mit einem Gepäckraum.

Bekannte Gepäckräume bei Omnibussen werden von einer Abdeckklappe in der Seitenwand begrenzt, hinter der sich ein wegen der Breite des Omnibusses tiefer und schwer zugänglicher Raum für die Aufnahme der Gepäckstücke befindet. Dieser wird typischerweise nach unten hin vom Bodenblech des Fahrzeugs und nach oben hin durch das Bodenblech des Passagierraums begrenzt. In einem derartigen Gepäckraum werden insbesondere bei Reisebussen eine Vielzahl von Gepäckstücken verschiedener Größe und Art zum Teil übereinandergestapelt und oftmals ohne erkennbare Ordnung eingebracht. Dadurch kann einerseits der verfügbare Laderaum möglichst effizient ausgenutzt werden.

Dies führt andererseits aber zu einer Reihe von Nachteilen: Aufgrund der geringen Bauhöhe und der großen Tiefe eines solchen Gepäckraumes sind die Gepäckstücke aus diesem generell schwer entnehmbar. Ferner ist oftmals nicht erkennbar, an welcher Stelle im Gepäckraum die Gepäckstücke eines bestimmten Passagiers gelagert sind, so dass beispielsweise bei Zwischenstopps das Gepäck von aussteigenden Passagieren oftmals erst zeitaufwändig durch Ausladen (und nachfolgendes Wiedereinladen) einer Vielzahl weiterer Gepäckstücke lokalisiert und entladen werden kann. Ein weiteres aus der Praxis bekanntes Problem ist, dass beim Ausladen des Gepäckraums die Gepäckstücke ohne erkennbare Ordnung ausgeladen und auf der Straße abgestellt werden. Passagiere müssen dann inmitten weiterer herumlaufender Passagiere und ggf. weiterer Passanten in dem unübersichtlichen Stapel von Gepäckstücken zeitaufwändig ihre eigenen Gepäckstücke finden. In derartigen unübersichtlichen Situationen kann es zu Verwechslungen von Gepäckstücken kommen. Dies kann ferner zu zusätzlichem Stress und Sicherheitsbedenken bei den Passagieren führen. Bei gängigen Gepäckräumen von Omnibussen sind die gestapelten Gepäckstücke den Querbeschleunigungen und Längsbeschleunigungen des Fahrzeugs während der Fahrt unvermindert ausgesetzt, so dass es insbesondere bei nur teilbeladenen, nicht sorgfältig beladenen Gepäckräumen vorkommen kann, dass einzelne Gepäckstücke durch den Gepäckraum "fliegen". Dadurch können Beschädigungen nicht ausgeschlossen werden. Ferner kann sich ein Gepäckstück am Ende der Fahrt in einem ganz anderen Bereich im Gepäckraum befinden als bei Beginn der Fahrt, was wiederum ein schnelles Lokalisieren und Entladen eines Gepäckstücks erschweren kann.

Das Dokument US 2009 21 88 39 A1 beschreibt eine modulares Staufachanordnung für ein Fahrzeug, umfassend eine Mehrzahl von jeweils seitlich miteinander gekoppelten Staufächern. Jedes Staufach beinhaltet eine Vielzahl von Rahmenelementen, die miteinander gekoppelt sind, um eine Rahmenstruktur für das Lagerfach zu bilden, eine Bodenanordnung, die eine Vielzahl von Bodenelementen umfasst, welche miteinander gekoppelt sind, und mindestens eine Tür umfasst, die konfiguriert ist, um den Zugang zum Lagerfach zu ermöglichen.

Das Dokument DE 42 36 422 A1 offenbart einen Gepäckraum für ein Fahrzeug, insbesondere einen Omnibus, der von wenigstens einer Fahrzeugseitenwand mittels einer Abdeckplatte freigebbar bzw. verschließbar ist. Der Gepäckraum umfasst ein oberhalb des Fahrzeugbodenblechs an Trägern der Bodengruppe verschiebbar gelagertes Bodenelement, das nach Öffnen der Abdeckplatte zum Be- und Entladen über die Seitenwand hinweg ausfahrbar ist.

Es ist somit eine Aufgabe der Erfindung, einen verbesserten Gepäckraum für einen Omnibus bereitzustellen, mit dem Nachteile herkömmlicher Gepäckräume und insbesondere die vorstehend aufgeführten Missstände vermieden werden können. Die Aufgabe der Erfindung ist es insbesondere einen Gepäckraum für einen Omnibus bereitzustellen, der sicher und leicht zu be- und entladen ist und der insbesondere eine schnelle Lokalisierung bestimmter Gepäckstücke ermöglicht.

Diese Aufgaben werden durch einen Gepäckraum und einen Omnibus mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Omnibus mit einem Gepäckraum bereitgestellt. Der Gepäckraum kann insbesondere mehrere an einer Fahrzeuglängsseitenwand angeordnete Abdeckeinrichtungen aufweisen, mittels derer der Gepäckraum freigebbar und/oder verschließbar ist. Die mehreren Abdeckeinrichtungen können beispielsweise jeweils als Abdeckplatte ausgeführt sein, die insbesondere einen Teil der Fahrzeuglängsseitenwand des Omnibusses ausbildet. Die Abdeckeinrichtung bzw. Abdeckplatte kann zum Öffnen und Verschließen schwenkbar oder klappbar ausgeführt sein. Der Gepäckraum kann ein unterhalb des Passagierraums angeordneter Gepäckraum sein, beispielsweise ein Gepäckraum, der nach unten hin vom Bodenblech des Fahrzeugs und nach oben hin durch das Bodenblech des Passagierraums begrenzt ist.

Erfindungsgemäß weist der Gepäckraum eine Vorrichtung zum Unterteilen des Gepäckraums in mehrere Staufächer auf, insbesondere eine derartige Vorrichtung, die den Gepäckraum in mehrere Staufächer, insbesondere mehrere separate Staufächer unterteilt. Mit anderen Worten ist der Gepäckraum so ausgeführt, dass er in mehrere separate Staufächer unterteilt ist. Der Begriff "Staufach" kann hier allgemein einen Staubereich bezeichnen, so dass die Vorrichtung voneinander abgegrenzte Staubereiche im Gepäckraum ausbildet. Dies bietet den Vorteil, dass die Gepäckstücke, z. B. korrespondierend zu (Zwischen-)Zielen einer Reiseroute oder korrespondierend zu einzelnen Passagieren, auf einzelne Staufächer aufgeteilt werden können, so dass ein bestimmtes Gepäckstück bei Bedarf schnell lokalisiert und entladen werden kann. Ein weiterer Vorteil ist, dass die Staufächer eine durch eine Längs- oder Querbeschleunigung des Fahrzeugs verursachte Bewegung des Gepäckstücks räumlich begrenzen und somit das Risiko von dadurch resultierenden Beschädigungen der Gepäckstücke reduzieren.

Gemäß einer besonders bevorzugten Ausführungsform umfasst die Vorrichtung zum Unterteilen des Gepäckraums in mehrere Staufächer mehrere vertikale Trennwände, die die einzelnen Staufächer seitlich begrenzen. Die Vorrichtung kann gemäß einer weiteren Variante auch eine horizontale Trennwand umfassen, die eine Trennwand zwischen einer oberen Reihe und einer unteren Reihe von Staufächern im Gepäckraum ausbildet.

Gemäß einer ersten erfindungsgemäßen Alternative weisen alle oder zumindest ein Teil der Staufächer jeweils eine Beschriftung auf, die eine Zuordnung des Staufachs zu einem Sitzplatz und/oder einem Passagier ermöglichen. Beispielsweise kann die Beschriftung eine Sitznummer und/oder einen Passagiernamen angeben.

Werden die Staufächer somit korrespondierend zu dieser Beschriftung beladen, ist jedes Staufach einem bestimmten Passagier bzw. Sitzplatz zugeordnet. Auf diese Weise kann das Gepäck eines bestimmten Passagiers im Gepäckraum besonders schnell lokalisiert und entladen werden, was ferner insbesondere besonders vorteilhaft ist, falls Passagiere bei Zwischenstopps den Reisebus verlassen und ihr Gepäck benötigen.

Alternativ oder zusätzlich können alle oder zumindest ein Teil der Staufächer eine Beschriftung aufweisen, die eine Zuordnung des Staufachs zu einer Sitzplatzgruppe, z. B. einer Sitzreihe, ermöglicht. Auf diese Weise können Staufächer mit größerem Stauvolumen realisiert werden, die in der Regel mit höherer Packungsdichte beladen werden können, da Gepäckstücke zur optimalen Ausnutzung des Laderaums unterschiedlich gestapelt und angeordnet werden können. Dennoch wird im Vergleich zu herkömmlichen Gepäckräumen, d. h. Gepäckräume ohne separate Staufächer, ein wesentlich schnelleres Lokalisieren und Entladen bestimmter Gepäckstücke ermöglicht, da der mögliche Suchraum über die Beschriftung der Sitzplatzgruppe stark eingeschränkt ist.

Alternativ oder zusätzlich können alle oder zumindest ein Teil der Staufächer eine Beschriftung aufweisen, die eine Zuordnung des Staufachs zu einem Zielort aufweist. Dies ist besonders vorteilhaft, wenn der Omnibus als Reisebus eingesetzt wird, der Reiserouten mit Zwischenstopps bedient, bei denen Passagiere den Reisebus verlassen. Bei dieser Variante können die Gepäckstücke gruppiert nach Reisezielen und korrespondierend zu der entsprechenden Beschriftung der Staufächer eingeladen werden. An einem Zwischenstopp können dann die Gepäckstücke der Passagiere, die an diesem Zwischenstopp aussteigen, schnell lokalisiert und entladen werden, da sich die Gepäckstücke bei zuvor ordnungsgemäß erfolgter Beladung in dem oder denjenigen Staufächern befinden, die die Beschriftung des jeweiligen Zielorts aufweisen.

Alternativ oder zusätzlich können gemäß einer zweiten erfindungsgemäßen Alternative die mehreren Staufächer des Gepäckraums in mehrere räumlich gruppierte Staufachgruppen gruppiert sein, wobei jede Staufachgruppe eine Beschriftung aufweist, die eine Zuordnung der Staufachgruppe zu einem Sitzplatz, einer Sitzplatzgruppe, einem Zielort und/oder einem Passagier ermöglicht.

Unter einer Beschriftung, die eine Zuordnung zu einem Sitzplatz, einer Sitzplatzgruppe, einem Zielort und/oder einem Passagier ermöglicht, wird eine Beschriftung verstanden, die diese Zuordnung direkt angibt oder aus der diese Zuordnung ableitbar ist. Beispielsweise kann die Beschriftung eines Staufachs und/oder einer Staufachgruppe eine alphanumerische Bezeichnung und/oder Codierung eines Sitzplatzes, einer Sitzplatzgruppe, z. B. einer Sitzreihe, eines Zielorts und/oder eines Passagiernamens enthalten.

Erfindungsgemäß ist die Beschriftung mittels einer Anzeigefläche, insbesondere einem Display, realisiert, die zentral ansteuerbar ist. Zusätzlich kann die Beschriftung als digitale Anzeige realisiert sein. Gemäß diesem Aspekt kann die Beschriftung der Staufächer im Gepäckraum einfach und schnell angepasst werden, um z. B. mittels der Beschriftung der Staufächer die Zuordnung der Staufächer zu einem Sitzplatz, einer Sitzplatzgruppe, einem Zielort und/oder einem Passagier flexibel und nach Bedarf für die bevorstehende Fahrt anzupassen.

Ferner kann die Beschriftung auch analog ausgeführt sein, d. h. z. B. in Form von einer fest angebrachten, nicht veränderbaren Beschriftung und/oder in Form eines austauschbaren Schildchens, das in eine entsprechend Aufnahmehalterung des Staufachs einschiebbar ist.

Die Abdeckeinrichtungen mittels derer der Gepäckraum freigebbar und/oder verschließbar ist, können im geöffneten Zustand einen Zugang zu einem Teil der mehreren Staufächer und/oder zu mindestens einer Staufachgruppe freigeben. Vorstehend wurde bereits erwähnt, dass die Abdeckeinrichtungen jeweils als eine Abdeckplatte ausgeführt sein können, die insbesondere einen Teil der Fahrzeuglängsseitenwand des Omnibusses ausbildet.

Gemäß einem weiteren vorteilhaften Aspekt der Erfindung können die Abdeckeinrichtungen jeweils eine Beschriftung aufweisen, die eine Zuordnung zu den Staufächern und/oder zu der mindestens einen Staufachgruppe ermöglicht, zu denen ein Zugang durch die jeweilige Abdeckeinrichtung im geöffnetem Zustand bereitgestellt wird. Dies bietet den Vorteil, dass auf diese Weise schnell diejenige Abdeckeinrichtung ermittelt werden kann, die zum Erreichen eines bestimmten Staufachs geöffnet werden muss. Die Beschriftung einer Abdeckeinrichtung kann beispielsweise die Zuordnung zu einer Sitzplatzgruppe oder einem Zielort angeben.

Eine weitere vorteilhafte Ausführungsform der Erfindung sieht vor, dass jedes oder zumindest ein Teil der Staufächer oder einzelne Staufachgruppen separat abschließbar ausgeführt sein können. Auf diese Weise kann die Gepäcksicherheit erhöht und Sicherheitsbedenken von Passagieren Rechnung getragen werden.

Zur Realisierung eines abschließbaren Staufachs kann das betreffende Staufach oder die betreffende Staufachgruppe zum Verschließen einen Rollladen oder einen Jalousieverschluss aufweisen. Auf diese Weise kann ein platzsparender, einfach zu handhabender Verschließmechanismus bereitgestellt werden.

Gemäß einem weiteren möglichen Aspekt können im Gepäckraum mindestens so viele Staufächer wie Passagiersitzplätze vorgesehen sein. Bei dieser Variante kann jedem Passagier ein eigenes Staufach angeboten werden.

Gemäß einer weiteren möglichen Ausführungsform ist die Vorrichtung zum Unterteilen des Gepäckraums als ein variabel ausgeführtes Schienensystem ausgeführt, mit mehreren verstellbaren Schienenelementen und in den Schienenelementen gehalterten Trennwänden zum Unterteilen des Gepäckraums in mehrere Staufächer. Auf diese Weise kann mit geringem Aufwand und Bauraumbedarf eine Unterteilung des Gepäckraums in einzelne Staufächer realisiert werden. Das Schienensystem kann ein Steckschienensystem sein. Dies ermöglicht eine schnelle variable Anpassung der Stauraumaufteilung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische perspektivische Teilansicht eines Omnibusses mit geöffnetem Gepäckraum gemäß einer Ausführungsform der Erfindung; und
- Figur 2: eine schematische Teilansicht eines geöffneten Gepäckraums eines Omnibusses gemäß einer Ausführungsform der Erfindung.

Gleiche oder funktional äquivalente Elemente sind in allen Figuren mit denselben Bezugszeichen bezeichnet und zum Teil nicht gesondert beschrieben.

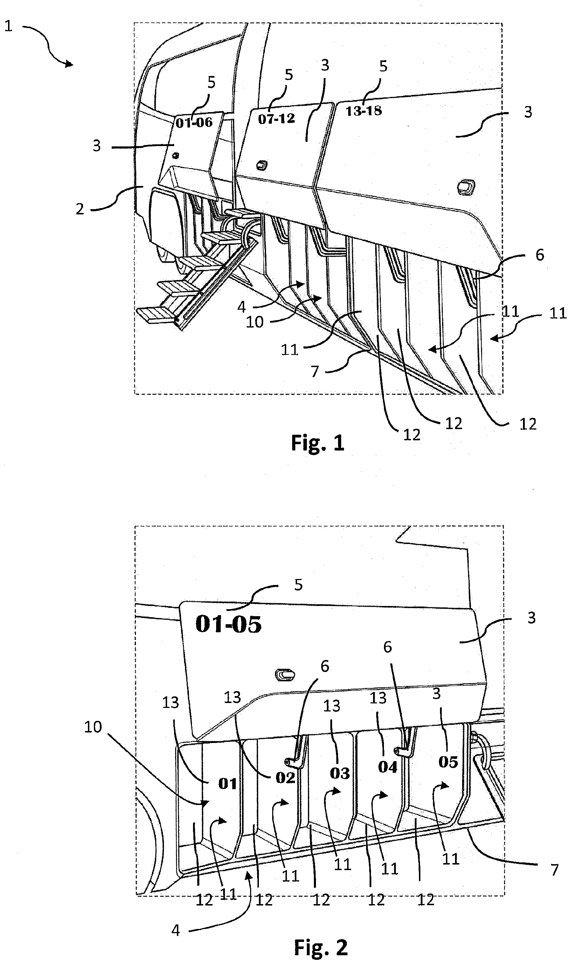

Figur 1 zeigt eine schematische perspektivische Teilansicht eines Omnibusses mit geöffnetem Gepäckraum gemäß einer Ausführungsform der Erfindung.

Der Omnibus 1 weist einen unterhalb des Passagierraums angeordneten Gepäckraum 4 auf. Der Gepäckraum 4 ist durch mehrere an einer Fahrzeuglängsseitenwand 2 angeordnete Abdeckeinrichtungen 3, z. B. Abdeckplatten, freigebbar und/oder verschließbar. Die Abdeckeinrichtungen 3 sind in Figur 1 im geöffnetem Zustand gezeigt. Über Schwenkarme 6 können diese nach unten zum Verschließen des Gepäckraums 4 verschwenkt werden. Die Abdeckeinrichtungen 3 bilden im geschlossenen Zustand einen Teil der unteren Fahrzeuglängsseitenwand 2 des Omnibusses 1 aus.

Der Gepäckraum weist eine Vorrichtung 10 zum Unterteilen des Gepäckraums 4 in mehrere Staufächer 12 auf. Die Vorrichtung 10 umfasst hier mehrere vertikale Trennwände 11, die am Boden 7 des Gepäckraums 4 befestigt sind. Die Trennwände 11 bilden somit separate Staufächer 12 im Gepäckraum 4 aus.

Dies ist in Figur 2 nochmals in einer vergrößerten Darstellung gezeigt. In Figur 2 ist auch erkennbar, dass die Staufächer 12 des Gepäckraums 4 eine Beschriftung 13 aufweisen, die eine Zuordnung des Staufachs 12 zu einem Sitzplatz oder einer Sitzreihe ermöglicht. In dem in Figur 2 gezeigten Beispiel weisen die einzelnen Staufächer 12 unterschiedlichen Zahlen "01" bis "05" als Beschriftung auf. Hierbei kann beispielsweise die Zahl "01" einem Sitzplatz mit der Nummer "01" entsprechen oder einer Sitzreihe "01". Ferner können Gruppen von Staufächern so beschriftet sein, dass jedes dieser Staufächer genau einem Sitz oder einer Sitzreihe zugeordnet ist, während andere Staufächer so beschriftet sind, dass jedes dieser anderen Staufächer mehreren Sitzen oder mehreren Sitzreihen zugeordnet ist. Auf diese Weise könnten z. B. bestimmte Reiseklassen, die unterschiedliche Gepäcklimits haben, realisiert werden.

Entsprechend können die Fächer gemäß dieser Beschriftung mit Gepäckstücken beladen werden, so dass z. B. in das Staufach mit der Nummernbeschriftung "01" nur Gepäckstücke von Passagieren geladen werden, die auf dem Sitz oder in der Sitzreihe mit der Nummer "01" reisen. Auf diese Weise kann das Gepäck der Passagiere beim Entladen schnell lokalisiert und entladen werden.

Ferner kann die Abdeckeinrichtung ebenfalls eine Beschriftung 5 aufweisen, die ein Zuordnung zu den Staufächern ermöglicht, zu denen ein Zugang durch die jeweilige Abdeckeinrichtung im geöffnetem Zustand bereitgestellt wird. So ist in Figur 2 erkennbar, dass die Abdeckeinrichtung 5 mit der Beschriftung "01-05" beschriftet ist, so dass im geschlossenen Zustand der Abdeckeinrichtung 5 sofort erkennbar ist, dass diese geöffnet werden muss, um den Zugang zu den Staufächern 12 mit den Nummern "01" bis "05" freizugeben.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Omnibus
- 2: Fahrzeuglängsseitenwand
- 3: Abdeckeinrichtung, z. B. Abdeckplatte
- 4: Gepäckraum
- 5: Beschriftung der Abdeckeinrichtung
- 6: Schwenkarm
- 7: Fahrzeugboden
- 10: Vorrichtung zum Unterteilen des Gepäckraums
- 11: Trennwand
- 12: Staufach
- 13: Staufach-Beschriftung

## Patentansprüche

1. Omnibus (1), umfassend einen Gepäckraum (4); mehrere an einer Fahrzeuglängsseitenwand (2) angeordnete Abdeckeinrichtungen (3), mittels derer der Gepäckraum (4) freigebbar und/oder verschließbar ist; und eine Vorrichtung (10) zum Unterteilen des Gepäckraums (4) in mehrere Staufächer (12), **dadurch gekennzeichnet, dass**
a1) zumindest ein Teil der Staufächer der Vorrichtung eine Beschriftung (13) aufweisen, die eine Zuordnung des Staufachs (12) zu einem Sitzplatz, einer Sitzplatzgruppe, einem Zielort und/oder einem Passagier ermöglicht; und/oder
a2) die mehreren Staufächer (12) in mehrere räumlich gruppierte Staufachgruppen gruppiert sind, wobei zumindest ein Teil der Staufachgruppen eine Beschriftung aufweist, die eine Zuordnung der Staufachgruppe zu einem Sitzplatz, einer Sitzplatzgruppe, einem Zielort und/oder einem Passagier ermöglicht,
b) wobei die Beschriftung mittels einer Anzeigefläche, insbesondere einem Display, realisiert ist, die zentral ansteuerbar ist.

2. Omnibus (1) nach Anspruch 1, wobei die Vorrichtung (10) zum Unterteilen des Gepäckraums (4) in mehrere Staufächer (12) mehrere vertikale Trennwände (11) umfasst.

3. Omnibus (1) nach einem der vorhergehenden Ansprüche, wobei die Beschriftung (13) eines Staufachs (12) und/oder einer Staufachgruppe eine alphanumerische Codierung und/oder Bezeichnung eines Sitzplatzes, einer Sitzplatzgruppe, eines Zielorts und/oder eines Passagiernamens enthält.

4. Omnibus (1) nach einem der vorherigen Ansprüche, wobei jede der Abdeckeinrichtungen im geöffneten Zustand einen Zugang zu einem Teil der mehreren Staufächer und/oder zu mindestens einer Staufachgruppe freigibt, wobei die Abdeckeinrichtungen jeweils eine Beschriftung (5) aufweisen, die eine Zuordnung zu den Staufächern und/oder zu der mindestens einen Staufachgruppe ermöglicht, zu denen ein Zugang durch die jeweilige Abdeckeinrichtung im geöffnetem Zustand bereitgestellt wird.

5. Omnibus nach einem der vorherigen Ansprüche, wobei zumindest ein Teil der Staufächer oder einzelne Staufachgruppen separat abschließbar ausgeführt sind.

6. Omnibus nach Anspruch 5, wobei das abschließbare Staufach und/oder Staufachgruppe zum Verschließen einen Rollladen oder einen Jalousieverschluss aufweist.

7. Omnibus (1) nach einem der vorherigen Ansprüche, wobei die mehreren Abdeckeinrichtungen jeweils als Abdeckplatte ausgeführt sind, die insbesondere einen Teil der Fahrzeuglängsseitenwand des Omnibusses ausbildet.

8. Omnibus nach einem der vorherigen Ansprüche, wobei mindestens so viele Staufächer wie Passagiersitzplätze vorgesehen sind.

9. Omnibus nach einem der vorherigen Ansprüche, wobei die Vorrichtung zum Unterteilen des Gepäckraums als ein variabel ausgeführtes Schienensystem ausgeführt ist, mit mehreren verstellbaren Schienenelementen und in den Schienenelementen gehalterten Trennwänden zum Unterteilen des Gepäckraums in mehrere Staufächer.

## Claims

1. A bus (1) comprising a luggage space (4); a plurality of covering devices (3) which are arranged on a vehicle longitudinal side wall (2) and by means of which the luggage space (4) is able to be opened up and/or closed; and an apparatus (10) for subdividing the luggage space (4) into a plurality of storage compartments (12), **characterized in that**
a1) at least some of the storage compartments of the apparatus have an inscription (13) that allows the storage compartment (12) to be assigned to a seat, a group of seats, a destination and/or a passenger; and/or
a2) the plurality of storage compartments (12) are grouped together into a plurality of spatially grouped storage compartment groups, wherein at least some of the storage compartment groups have an inscription that allows the storage compartment group to be assigned to a seat, a group of seats, a destination and/or a passenger,
b) wherein the inscription is realized by means of a display surface, in particular a display, which is centrally controllable.

2. The bus (1) according to Claim 1, wherein the apparatus (10) for subdividing the luggage space (4) into a plurality of storage compartments (12) comprises a plurality of vertical partition walls (11) .

3. The bus (1) according to either of the preceding claims, wherein the inscription (13) of a storage compartment (12) and/or of a storage compartment group contains an alphanumeric code and/or designation of a seat, of a group of seats, of a destination and/or of a passenger name.

4. The bus (1) according to one of the preceding claims, wherein each of the covering devices, in the open state, opens up access to some of the storage compartments and/or to at least one storage compartment group, wherein the covering devices each have an inscription (5) that allows assignment to the storage compartments and/or to the at least one storage compartment group to which access is provided by the respective covering device in the open state.

5. The bus according to one of the preceding claims, wherein at least some of the storage compartments or individual storage compartment groups are embodied so as to be separately closable.

6. The bus according to Claim 5, wherein the closable storage compartment and/or storage compartment group has a shutter or a roller shutter for closing.

7. The bus (1) according to one of the preceding claims, wherein the plurality of covering devices are each embodied as a covering panel which is in particular a part of the vehicle longitudinal side wall of the bus.

8. The bus according to one of the preceding claims, wherein at least as many storage compartments are provided as there are passenger seats.

9. The bus according to one of the preceding claims, wherein the apparatus for subdividing the luggage space is embodied as a variably embodied rail system having a plurality of adjustable rail elements and partition walls, held in the rail elements, for subdividing the luggage space into a plurality of storage compartments.

## Revendications

1. Omnibus (1), comprenant un espace à bagages (4) ; plusieurs dispositifs de recouvrement (3) disposés sur une paroi latérale longitudinale de véhicule (2) au moyen desquels l'espace à bagages (4) peut être libéré et/ou fermé ; et un dispositif (10) permettant de subdiviser l'espace à bagages (4) en plusieurs compartiments de rangement (12),
**caractérisé en ce que**
a1) au moins une partie des compartiments de rangement du dispositif présente une inscription (13) qui permet une attribution du compartiment de rangement (12) à un siège, à un groupe de sièges, à une destination et/ou à un passager ; et/ou
a2) les plusieurs compartiments de rangement (12) sont regroupés en plusieurs groupes de compartiments de rangement regroupés dans l'espace, au moins une partie des groupes de compartiments de rangement présentant une inscription qui permet une attribution du groupe de compartiments de rangement à un siège, à un groupe de sièges, à une destination et/ou à un passager,
b) l'inscription étant réalisée au moyen d'une surface d'affichage, en particulier d'un dispositif d'affichage qui peut être piloté de manière centrale.

2. Omnibus (1) selon la revendication 1, dans lequel le dispositif (10) permettant de subdiviser l'espace à bagages (4) en plusieurs compartiments de rangement (12) comprend plusieurs parois de séparation verticales (11) .

3. Omnibus (1) selon l'une quelconque des revendications précédentes, dans lequel l'inscription (13) d'un compartiment de rangement (12) et/ou d'un groupe de compartiments de rangement contient un codage alphanumérique et/ou une désignation d'un siège, d'un groupe de sièges, d'une destination et/ou d'un nom de passager.

4. Omnibus (1) selon l'une quelconque des revendications précédentes, dans lequel chacun des dispositifs de recouvrement libère à l'état ouvert un accès à une partie des plusieurs compartiments de rangement et/ou à au moins un groupe de compartiments de rangement, les dispositifs de recouvrement présentant respectivement une inscription (5) qui permet une attribution aux compartiments de rangement et/ou audit au moins un groupe de compartiments de rangement auxquels un accès est fourni par le dispositif de recouvrement respectif à l'état ouvert.

5. Omnibus selon l'une quelconque des revendications précédentes, dans lequel au moins une partie des compartiments de rangement ou des groupes de compartiments de rangement individuels sont réalisés de manière à pouvoir être verrouillés séparément.

6. Omnibus selon la revendication 5, dans lequel le compartiment de rangement et/ou le groupe de compartiments de rangement verrouillable(s) présente(nt) pour la fermeture un volet roulant ou une fermeture à jalousie.

7. Omnibus (1) selon l'une quelconque des revendications précédentes, dans lequel les plusieurs dispositifs de recouvrement sont respectivement réalisés sous la forme d'une plaque de recouvrement qui réalise en particulier une partie de la paroi latérale longitudinale de véhicule de l'omnibus.

8. Omnibus selon l'une quelconque des revendications précédentes, dans lequel au moins autant de compartiments de rangement que de sièges de passager sont prévus.

9. Omnibus selon l'une quelconque des revendications précédentes, dans lequel le dispositif permettant de subdiviser l'espace à bagages est réalisé sous la forme d'un système de rails réalisé de manière variable, comprenant plusieurs éléments de rail réglables et des parois de séparation maintenues dans les éléments de rail afin de subdiviser l'espace à bagages en plusieurs compartiments de rangement.
